Europäisches Patentamt

European Patent Office

Office européen des brevets

(19)

(11) Publication number: **0 213 816 B1**

(12) **EUROPEAN PATENT SPECIFICATION**

(45) Date of publication of patent specification: 26.06.91

(51) Int. Cl.⁵: **B29C 53/58**, //B29L23:22, B29L31:06

(21) Application number: 86306149.5

(22) Date of filing: 08.08.86

(54) Composite member wound at optimized angles.

(30) Priority: 16.08.85 US 766258

(43) Date of publication of application:
11.03.87 Bulletin 87/11

(45) Publication of the grant of the patent:
26.06.91 Bulletin 91/26

(84) Designated Contracting States:
DE FR GB IT

(56) References cited:
EP-A- 0 067 952
EP-A- 0 145 810
FR-A- 2 348 393

JOURNAL OF APPLIED MECHANICS, vol. 46,
September 1979, pages 543-550, New York,
US; Z. HASHIN: "Analysis of properties of
fiber composites with anisotropic constituents"

COMPOSITES, vol. 9, no. 4, October 1978,
pages 263-271, IPC Business Press; B. SPENCER et al.: "Effect of winding angle on the
failure of filament wound pipe"

(73) Proprietor: LORD CORPORATION
2000 West Grandview Boulevard P.O. Box
10038
Erie Pennsylvania 16514-0038(US)

(72) Inventor: Gupta, Bhagwati P.
932 Ruth Avenue
Erie Pennsylvania 16509(GB)

(74) Representative: Dunlop, Brian Kenneth
Charles et al
c/o Wynne-Jones, Lainé & James 22 Rodney
Road
Cheltenham Gloucestershire GL50 1JJ(GB)

## Description

This invention relates to an improved composite member formed generally in the shape of a cylinder or rod and made up of a matrix material and a filamentary material wound about a longitudinal axis of the member. The filamentary material is impregnated with a matrix material and wound in layers at a winding or lay angle to the longitudinal axis, each odd numbered layer being wound in a first direction and each even numbered layer being wound in a second direction along the longitudinal axis. The particular optimum winding angle at which the stresses are minimized or reduced for each particular matrix material being determined by finding the winding angle at which the radial strain is equal to the circumferential strain in the member or by finding the winding angle at which the radial Poisson's ratio is equal to the circumferential Poisson's ration as more fully described hereafter.

The invention more specifically relates to an improved composite member and a method of making such improved composite member that is relatively strong but is also relatively flexible in bending modes and in axial modes, is relatively stiff in torsional modes, and produces low bending stresses within the member. By way of illustration only and not intending to limit the scope of the invention, the composite member disclosed herein will be useful in automobile drive shafts, helicopter rotor torsional links and couplings, and other such applications where torsional loads are to be transmitted and misalignment has to be accommodated.

Composite members for use where torsional loads are to be transmitted and misalignment has to be accommodated have been known in the art for some time. Typically, such composite members have been formed of high strength filaments impregnated with a substantially rigid matrix material such as epoxy. A composite member formed in such a manner is very stiff in bending and is very stiff in torsion. It therefore cannot readily compensate for significant misalignments between the members interconnected by it. In drive systems where significant misalignments occur, as in those of certain vehicles, it has heretofore been necessary to provide one or more misalignment accommodating couplings in association with the shaft. This undesirably increases the drive system complexity, weight, expense and size. The present invention is equally applicable to many other applications where stiffness in torsional modes and flexibility in bending and axial modes is required.

An example of a flexible coupling member is discussed in Stuemsky, U.S. Patent No. 3,628,352 which utilizes oppositely wound spiral spring elements disposed within a matrix of rubber material. These springs provide a gripping means that resist slippage and thus transmit torques between driver and driven members.

Another example of the flexible member is Remi, U.S. Patent No. 3,791,898 which teaches a flexible core surrounded with layers of helically wound metallic wires or cables which are embedded in an elastomeric or thermoplastic material.

Kobalter, U.S. Patent 3,860,134 discloses a structure formed of layers of filamentry or other reinforcing material which alternate with filament-free layers of elastomeric material. The structures are soft in torsion and are not adapted or intended for use as drive shafts or the like.

Logan et al, U.S. Patent 3,921,674 discloses a hose construction having an inner layer of an elastomeric material and another layer being made of an elastomeric matrix compound having elongated fibers embedded therein and extending in a helical pattern, the outer layer being bonded against the inner layer portion and cured therewith.

In a second Logan et al patent, U.S. Patent No. 4,013,101 a hose is disclosed made up of at least one layer made of an elastomeric material having randomly distributed elongated fibers embedded therein in substantially parallel relation with each other and extending longitudinally in a helical pattern about a reference axis of the hose construction and at an angle relative thereto.

Ewing et al, U.S. Patent Nos. 4,023,834 and 4,023,835 discloses structures which relate to radially expandable and contractable pipe couplings having a small length to diameter ratio and torsional strength. The couplings are not intended to sustain torsional loads of the substantial magnitudes of those born by drive shafts and would buckle or otherwise fail if subjected to such loads.

Ross, U.S. Patent No. 4,157,101 reissue No. 31,047 discloses a hose adapted to resist kinking or collapsing which the walled structure includes at least two radially spaced layers of monofilaments of textile material with a layer of elastomeric material separating the layers. A layer of fabric of aramid fiber is included for reinforcement.

Yates et al, U.S. Patent No. 4,171,626 discloses a carbon reinforced composite drive shaft having at least four bonded circumferentially disposed layers of appropriate fibrous reinforcement situated within a resin matrix. The carbon fibers are disposed generally longitudinally in a layer at an intermediate position within the tube wall to provide stiffness. Glass fibers are disposed generally longitudinally in a layer at an intermediate position within the two walls to provide resistance to torsion bucking. The innermost and outermost layers each comprise glass fibers disposed at an angle from a line parallel to the longitudinal axis of the shaft.

Stanley et al, U.S. Patent 4,178,001 discloses a pipe coupling made of plies of rubber reinforced with conventional cord or roving laid at an angle to the longitudinal axis of the coupling with one right hand helix and one left hand helix.

Linsenmann, U.S. Patent 4,186,696 discloses a structure suitable for push rods and the like in the form of a tubular composite adapted to transmit substantial thrust forces. This structure comprises a tubular core of continuous reinforcing fibers in a resin matrix which are unidirectionally and longitudinally oriented. This core is sheathed with resin impregnated continuous fibers oriented at about plus or minus $40°$ to about plus or minus $60°$ with respect to longitudinal axis of the core.

Yates et al, U.S. Patent No. 4,238,539 discloses a tubular fiber reinforced composite shaft, fiberous material bearing a resinous material is formed in layers to form a torsion transmitting connection.

The torque transmitting composite members of U.S. Patent No. 4,391,594 and European patent application No. 0,022,467 include bladder or diaphragm-like sections that are of enlarged diameter and short length in relationship to the remainder of the members. Misalignments are accommodated by localized deflection of the enlarged sections of the members, rather than by distributed bending thereof. Additionally, the size of their enlarged sections and the expense of forming the same makes the use of such composite members impractical in many vehicle drive systems and other applications.

Federmann et al, U.S. Patent 4,421,497 discloses a fiber reinforced drive shaft for motor vehicles consisting of a tubular shaft of synthetic plastic resin in which fibers are embedded.

McLain et al, U.S. Patent No. 4,248,062 discloses a composite drive shaft consisting of multi-layered fiber reinforced plastic shaft, portions of which are inserted into and bonded to a metallic sleeve. The reinforcing fibers employed in the the fiber reinforced plastic material may be boron, glass, graphite or other filaments, either natural or synthetic or a combination thereof. Examples of suitable organic fibers are the polyamides, such as are available from E.I. duPont de nemours and Co., Inc. under the registered trademark "Kevlar".

Stephan et al, U.S. Patent 4,452,569 discloses a rotor constructed as a tubular winding body of fiber material, the fibers of which are embedded in a rubber elastic bonding or binding mass. The fibers are oriented in a cross-over relationship relative to the longitudinal axis of the control rod and thus any torque moments required can be taken up fully by subjecting the fibers to tension loads. When the control rod is subjected to a bending load, the fibers are shifted relative to each other permitting bending.

Article by T. Akasaka, in Rubber Chemistry and Technology; Vol. 54, No. 3; July/August 1983 entitled "Structural Mechanics of Radial Tires". This article describes laminated plates made up of only two plies which are flat instead of round in section and having an interply layer that is only stressed in plane type bending. This article does not cover bending of the type we are concerned with in the present application.

Article by Z. Hashin in Journal of Applied Mechanics, September 1979, Vol. 46 pp. 543-550, entitled "Analysis of Properties of Fiber Composites with Anisotropic Constituents" develops expressions, bounds and applications for the effective elastic moduli of unidirectional fiber composites.

Book by S.G. Likhnitskii entitled "Theory of Elasticity of an Anisotropic Elastic Body", published by Holden-Day, Inc., San Francisco 1963 utilized the theory of analytic functions of several complex variables to solve boundary value problems of anisotropic bodies and to develop a technique to determine the stresses and deformation of anisotropic bodies by theoretical means.

EP-A-0145810 describes a composite member including a series of anisotropic layers bonded together circumferentially about a longitudinal axis, each layer pair comprising substantially parallel filaments bonded together by a matrix material, the filament being layered on predetermined angles which are substantially equal and opposite in adjacent layers.

The composite members above described do not provide for, or anticipate, layers of filamentary material impregnated with a matrix material and being wound at optimum angles to a longitudinal axis of the composite member, at which bending stresses are minimum, and at which the circumferential strain and the radial strain are equal when the member is strained in the axial direction.

The present invention consists in a composite elongate member for use in transmitting torque between juxtaposed elements rotatable about axes that may be misaligned, the member including a series of pairs of overlapped anisotropic layers bonded together circumferentially about a longitudinal axis with each layer pair comprising substantially parallel filaments in each layer bonded together by a matrix material, the filaments in each layer pair being disposed at a predetermined lay angle with respect to said longitudinal axis, the lay angle of the filaments in adjacent layers of each pair being substantially equal in magnitude with one another but opposite in direction with respect to said longitudinal axis so that filaments in adjacent layers of each pair cross one another, characterised in that said lay angle of at least one of said pairs of layers is in a range of between about 55 degrees to about 62.7 degrees and is preselected within said range with respect to the stiffness of the matrix material so that the strain in the member in the circumferential direction is substantially equal to the strain in the member in the radial direction when the member is subjected to strain in the axial direction, whereby the bending stress in the composite member is at a minimum while the ratio of torsional stiffness to bending stiffness of the member is not adversely affected.

Accordingly, the composite member of the present invention includes a tube or rod made of layers of endless stiff and high strength filamentary material impregnated with or embedded within matrix material and wound or laid at optimized angles. The optimized angle is the angle for a particular matrix and filamentary material at which the stresses are minimized or reduced. This particularly occurs when the radial Poisson's ratio is equal to the circumferential Poisson's ratio, or when the radial strain is equal to the circumferential strain. The stiff filamentary material is wound on the composite member in layers, each odd numbered layer wound at an angle to the longitudinal axis in a first direction and each even numbered layer wound at an equal and opposite angle to the longitudinal axis in a second direction. The filaments of each layer pair being orientated in a cross-over relationship relative to the longitudinal reference axis of the structural member.

Of each layer pair the first layer comprises filamentary material disposed at a determined optimum angle to a line parallel to the longitudinal reference axis of the shaft which filaments will extend in a helical pattern in a first direction around the longitudinal reference axis of the shaft. The second layer of each layer pair will comprise filamentary material disposed in a helical pattern at the same determined angle but extending in the opposite direction to a line parallel to the longitudinal reference axis of the member. The composite member may be made up of a single or of several filamentary material layer pairs, as required by a particular application. The present members as described will provide maximum torsional to bending stiffness ratio while producing in the members reduced stresses and in a preferred embodiment will produce the minimum possible stresses. By the minimization of stresses the composite members will be able to transmit torque loads and accommodate bending loads of greater magnitude than the same composite members constructed with the filaments extending at other than the determined optimized angles.

The stresses in composite members as previously constructed are greatly increased due to the difference between the radial and circumferential Poisson's Ratios of the member. The radial Poisson's ratio being determined by taking strain in the radial direction and dividing by strain in the axial direction. The circumferential Poisson's ratio being determined by taking strain in the circumferential direction and dividing by strain in the axial direction. The result is made positive by the sign convention of Poisson's ratio. When these two Poisson's ratios are equal, the bending stresses in the composite member will be minimized. The nomenclature of Poisson's ratios may be replaced by the nomenclature of strain. Therefore, the present invention may be practiced in terms of strain. The preferred optimum winding angle is achieved when the circumferential strain and the radial strain of the composite member become equal when the member is strained in the axial direction.

It is an object of this invention to provide an improved composite member having layer pairs of filamentary material impregnated with a particular matrix material and wound at an optimum angle to a longitudinal reference axis to provide reduced or minimum stresses in the composite member. It is a further object of this invention to provide an improved composite member for applications where torsional loads are to be transmitted and misalignment has to be accommodated.

With the above and other objects in view, the present invention consists of the combination and arrangement of parts hereinafter more fully described, illustrated in the accompanying drawings and more particularly pointed out in the appended claims, it being understood that changes may be made in the form, size, proportions and minor details of construction without departing from the scope of said claims.

Other objects, features and advantages of the present invention will become more fully apparent from the following detailed description of the preferred embodiment, the appended claims and the accompanying drawings in which:

FIGURE 1 is a sectional cutaway perspective view of a portion of a preferred embodiment of the composite structural member in accordance with the invention with portions broken away to illustrate the alternating layers of the filamentary material of the member;

FIGURE 2 is a right end view of the composite member of Figure 1 shown as a solid rod member;

FIGURE 3 is a right end view of the composite structural member of Figure 1 shown as a tubular member and indicating the r and $\theta$ axes;

FIGURE 4 is an elevational view of a composite structural member in accordance with the invention, which view includes a schematic showing of the filamentary material of the shaft and indicating the angle to be determined for the layers in each direction and indicating the z axis.

FIGURE 5A is a fragmentary cross-sectional view of a composite structural tube member with forces as indicated applied thereto;

FIGURE 5B is a right end view of the composite structural member illustrated in Figure 5A according to the invention;

FIGURE 5C is a graphical illustration of the minimum (linear) stress distribution in the configuration indicated in Figures 5A and 5B and with the forces applied as indicated in Figure 5A;

FIGURE 5D is a graphical illustration of the non-linear stress distribution for composite structural members made up of soft matrix composite materials and stiff filamentary material wound at plus and minus 45° in the configuration illustrated in Figures 5A and 5B and with forces applied as indicated in Figure 5A;

FIGURES 6 through 9 are graphic illustrations of the relationship between Poisson's ratios and the plus and minus filament winding angle for composite structures made of matrix materials respectively having Young's modulus of 34.48 (5,000), 172.44 (25,000), 344.8 (50,000) and 3448 (500,000) MPa (pounds per square inch).

FIGURE 10 is a very small segment of a uniaxial composite layer of a composite member indicating the L and $T_1$ and $T_2$ axes.

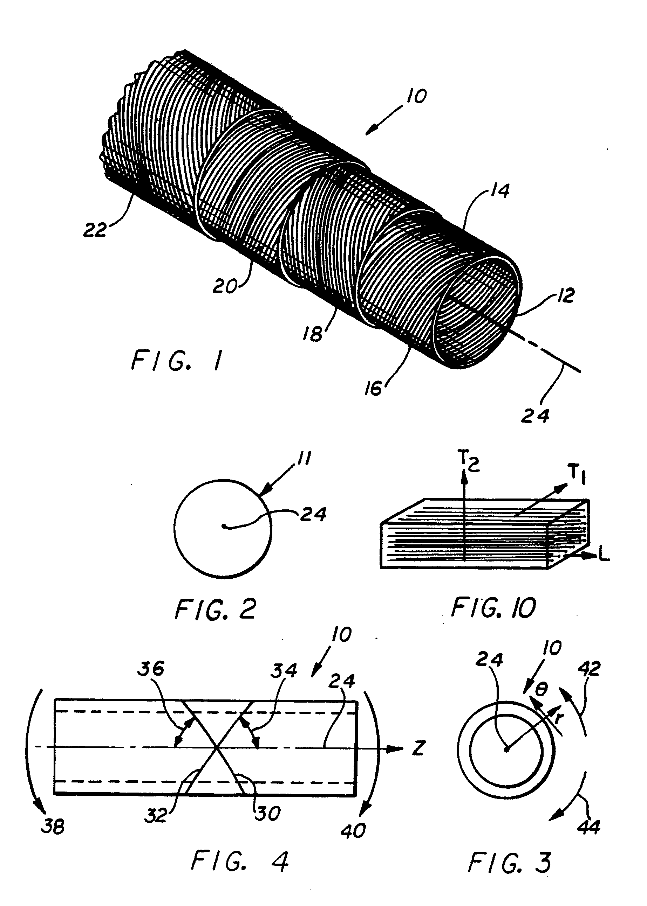

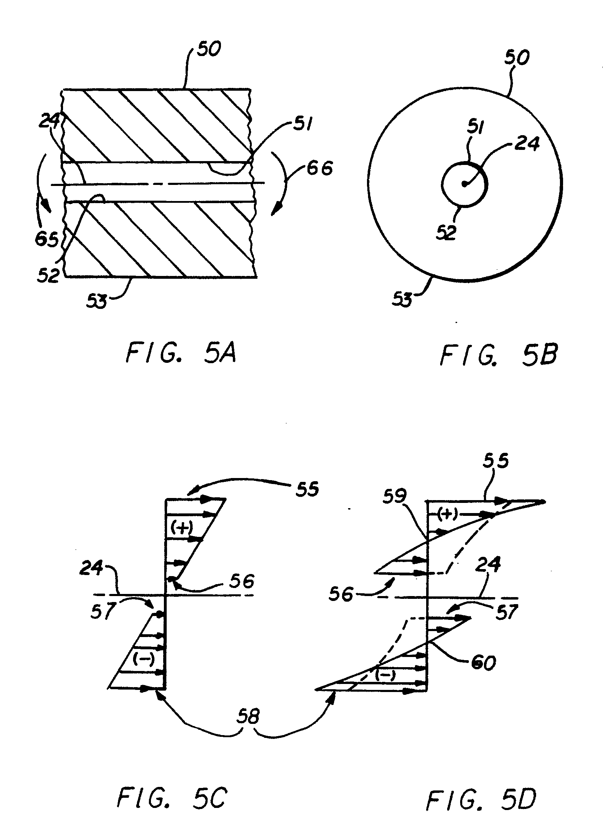

The preferred embodiment of the present invention is illustrated by way of example in Figures 1 through 4. With specific reference to Figures 1 and 4, the composite member indicated at 10 consists of a particular matrix material 12 and a suitable filamentary material 14.

The invention relates to an improved composite member and to a method of making an improved composite member relatively strong, relatively flexible in bending modes and axial modes, relatively stiff in torsional modes, and produce low bending stresses within the member. The composite members of the present invention are particularly suited for use where torsional loads are to be transmitted and misalignment has to be accommodated.

The winding or lay angle of the filamentary material is critical to the present invention. The winding angle is selected to reduce stresses for a composite member made of a particular matrix material and a particular filamentary material. In a preferred embodiment of the present invention the winding angle is selected to minimize stresses in the composite member. This winding angle may be considered the critical angle or optimum angle because for any composite member made up of any particular matrix material and filamentary material, the maximum torsional stiffness to bending stiffness ratio for those materials will be maintained, and the maximum torsional stiffness to axial stiffness ratio will be maintained with no measurable loss of capacity to transmit torsion and at the same time minimize stresses, for example, bending stresses. While the properties of the matrix material and the filamentary material will have some effect on the critical winding angle the properties of the matrix material will greatly effect the critical angle.

Therefore, while the present invention is applicable to any generally cylindrical composite member, it is particularly advantageous for use in members utilizing matrix materials having Young's moduli of 689.6 MPa (100,000 psi) or less.

The matrix material may be any suitable urethane, epoxy or other binding material and will be selected for its suitability for a particular composite member or application. The matrix material mechanically interconnects and fills the space between the filaments, fixes the alignment of the filamentary material and transmits and distributes loads to and among the filamentary material. The stress distribution through a composite member is non-linear for such members as previously constructed. This non-linearity increases and the stress distribution in the composite member becomes less favorable as the Young's modulus of the matrix material of the member decreases. This non-linearity becomes a significant factor in the construction of composite members for matrix materials having Young's moduli of approximately 689.6 (100,000 psi) or less. In the present invention where the optimum lay angle for the filaments is determined the stress distribution through the member is linear.

The filamentary material may be carbon, boron, glass, graphite, steel or other high strength filaments that are suitable for use in composite members.

In Figure 1 a first uniaxial layer 16 showing the filamentary material extending along the longitudinal axis 24 in a first direction, in a helical pattern, second uniaxial layer 18 showing the filamentary material extending along the longitudinal axis 24 in a second direction, in a helical pattern, a third uniaxial layer 20 showing the filamentary material extending along the longitudinal axis in the first direction, in a helical pattern, and a fourth uniaxial layer 22 showing the filamentary material extending along the longitudinal axis in the second direction, in a helical pattern. Composite members will be made up of a number of alternating layers suitable for the application of the particular composite member.

In a preferred embodiment of the invention a particular filamentary material is impregnated with a particular matrix material and is wound at the critical or optimum angle in two or more layers to form a composite member. The particular filamentary material and matrix material will be selected for the characteristics they will supply to the member and will depend upon the application or use to which the member is to be put. The layers will be applied in a crossing relationship, that is, the filamentary material from each alternate layer will cross the filamentary material of the previous layer, and the layers will be balanced, that is, for every layer provided in a first direction, a layer in the second direction will be provided.

Figure 2 shows an end view of a composite member in the configuration of a solid rod as compared to the tube structure illustrated in Figures 1, 3 and 4.

Figures 3 and 4 illustrate the critical angle at which the filaments are laid and the various forces applied to the composite member. A first filament 30 is shown at a first angle 36 to the longitudinal axis 24, and a second filament 32 is shown at a second angle 34 to the longitudinal axis. The first and second angles are equal in magnitude and opposite in direction along the longitudinal axis. Composite member 10 may be subjected to several forces including a first bending force 36, a second bending force 40, a first torsional force 42 and a second torsional force 44.

The composite member 10 having a longitudinal axis 24 extending through the center thereof is stiff and strong in torsional modes and through appropriate choice of the matrix material, can be made more or less relatively flexible in bending and axial modes. The composite member as disclosed herein will also produce relatively low bending stresses within the structural member.

For example, composite members made of flexible matrix materials, i.e., those having a Young's modulus of approximately 689.6 MPa (100,000 psi) or less, and wound at plus and minus 45° show a bending stress distribution which is highly undesirable. The smaller the Young's modulus of the matrix material, the more undesirable the bending stress distribution for the composite member. With reference to Figures 5A through 5D, a typical linear stress distribution which gives desirable minimum stresses and a non-linear distribution occurring in a flexible matrix composite wound at plus and minus 45° are shown. We see in Figure 5A a cross-sectional portion of a tube having an upper outer surface reference line 50 parallel to the longitudinal axis 24, an upper inner surface reference line 51 parallel to the longitudinal axis 24, a lower inner surface reference line 52 parallel to the longitudinal axis 24 and a lower outer surface reference line 53 parallel to the longitudinal axis. Bending forces will be discussed at and between these surfaces at the reference lines to illustrate the bending stress distribution for various materials. When bending forces 65 and 66 are applied to the tube as indicated in Figure 5A, the tubes made of flexible matrix composites and wound at plus and minus 45° show a bending stress distribution which is highly undesirable. As illustrated in Figure 5D this stress distribution becomes more non-linear and less desirable as the Young's modulus of the matrix material is reduced. A typical minimum bending stress distribution which is a linear stress distribution is shown in Figure 5C and a typical non-linear distribution for a composite tube made from a flexible matrix material and a stiff filamentary composite wound at plus and minus 45° is shown in Figure 5D in phantom lines. Figure 5D indicates that as the Young's modulus is decreased, the non-linearity continues to increase. The stress distribution will reach the point where the stress will shift from tension to compression one side of the axis 24 of the tube 10 and from compression to tension of the other side of the axis 24 of the tube 10 as shown in full lines in Figure 5D.

As shown in Figure 5C the upper outer surface at 50 and the upper inner surface at 51 are in tension as indicated by the stresses 55 and 56 in Figure 5C. The lower inner surface 52 and the lower outer surface 53 are in compression as indicated by the compressive stresses 57 and 58 in Figure 5C. The outer surface stresses at the outer surfaces 50 and 53 are the maximum tensile and compressive stresses, while the inner surface stresses at the inner surfaces 51 and 52 are the minimum tensile and compressive stresses. The variation from surface 50 to 51 and the variation from surface 53 to 52 is linear through the thickness of the tube.

On the other hand, as shown in Figure 5D, for the case of the flexible matrix composite tube wound at plus and minus 45° the stresses from outer surface 50 and outer surfaces 53 vary non-linearly through the thickness of the tube from the outer surfaces to the inner surfaces. The tensile stress will vary non-linearly from a maximum at upper outer surface stress 50 to a minimum stress at upper inner surface 51 as indicated in phantom lines, or, as illustrated in solid lines for a relatively soft matrix material the non-linear stress will decrease from a maximum tension stress indicated at 55 at upper outer surface 50 through a neutral stress, indicated at upper neutral stress point 59, to a compressive stress which increases to a maximum compressive stress indicated at 56 for the upper portion of the tube at upper inner surface 51. The maximum compressive stress indicated at the lower outer surface 53 varies non-linearly to a minimum stress at the lower inner surface 52 as indicated in phantom lines, or as illustrated in solid lines for the relatively softer matrix materials the non-linear stress will decrease from a maximum compression stress indicated at 58 at the lower outer surface 53 through the thickness of the tube through a lower neutral point indicated at 60 to a maximum tension stress 57 at lower inner surface 52. Thus while subjected to bending, stress in the upper tube portion between surfaces 50 and 51 shift from tension force to compression and the lower tube portion between surfaces 52 and 53 shift from compression to tension through its thickness for the relatively softer matrix materials. The inner surfaces at 51 and 52 do not have the same kind of stresses as their side of the outer surfaces 50 and 53 have. The stresses become opposite for the softer matrix materials which are also the materials which will accommodate the most bending. The magnitude and nature of the inner surface stresses will depend on the modulus of the matrix material. For a composite made of stiffer matrix material these stresses will not become opposite from their outer surface stresses, but the distribution will still be non-linear. The softer the matrix material, the greater the non-linearity will be. Because of this non-linearity and (if present) the opposite stresses at the inner surface, the maximum tension and compressive stresses at the outer top and bottom surfaces will become much larger than those illustrated in Figure 5C.

Table 1, for purposes of illustration, shows stresses at the inner and outer surface of a cantilevered tube, at 0.254 m (10") from the point of application of a transverse load of 44.5 N (10 pounds). The length of the cantilever is 1.016 m (40"), and the outside radius is 26.67 mm (1.05"), and the inside radius is 22.86 mm (.9"). The fiber material is glass having a Young's modulus of 82.8 GPa (12 x 10$^6$ psi); Poisson's ratio of 0.1786 and a fiber volume fraction of 50%. The winding angle is plus and minus 45°. Three matrix materials were used; a soft material such as urethane, having a Young's modulus of 34.48 MPa (5,000 pounds per square inch); a stiffer material such as urethane having a Young's modulus of 172.4 MPa (25,000 pounds per square inch); and epoxy resin having a Young's modulus of 3448 MPa (500,000 psi).

EP 0 213 816 B1

## TABLE 1

| Matrix Modulus $E_m$ MPa (psi) | | | 34.48 (5000) | 172.4 (25000) | 3448 (500,000) |
|---|---|---|---|---|---|
| Ratio of Torsional Shear Modulus $G_{\theta z}$ and Young's Modulus $E_z$ of Composite Member | | | 24.4 | 5.26 | 1.07 |
| BENDING NORMAL STRESSES MPa (psi) | OUTER SURFACE | Linear (minimum) | ±1.65 (±239) | ±1.65 (±239) | ±1.65 (±239) |
| | | Actual | ±14.0 (±580) | ±2.1 (±305) | ±1.7 (±247) |
| | | Increase% | 143 | 28 | 3 |
| | INNER SURFACE | Linear (minimum) | ±1.4 (±204) | ±1.4 (±204) | ±1.4 (±204) |
| | | Actual | ±1.7 (±170) | ±0.91 (±132) | ±1.35 (±196) |
| | | Increase% | 183 | 35 | 4 |
| MAXIMUM BENDING SHEAR STRESSES MPa (psi) | | Minimum | ±0.15 (±21.7) | ±0.15 (±21.7) | ±0.15 (±21.7) |
| | | Actual | 0.84 (122) | 0.30 (44) | 0.21 (30) |
| | | Increase% | 462 | 103 | 38 |

Note the reversal of the sign of the stress on the inner surface for $E_m$ = 34.48 MPa (5,000 psi)

8

## TABLE 2

| Matrix Modulus $E_m$ MPa (psi) | 34.48 (5000) | 172.4 (25000) | 3448 (500,000) |
|---|---|---|---|
| Optimum Winding or lay angle 34 and 36 in Figure 4 | ±55.6 | ±56.6 | ±62.7 |
| Ratio of torsional Shear Modulus $G_{\theta z}$ and Youngs Modulus $E_z$ of Composite Member | 29.8 | 6.8 | 1.0 |
| BENDING NORMAL STRESSES — OUTER SURFACE | ±1.64 (±238) | ±1.64 (±238) | ±1.64 (±239) |
| INNER SURFACE | ±1.42 (±206) | ±1.42 (±206) | ±1.42 (±205) |
| BENDING SHEAR STRESS MPa (psi) — ACTUAL | 0.43 (62) | 0.20 (29) | 0.15 (22) |
| REDUCTION (from ±45°) | 50% | 34% | 27% |

Table 1 indicates that there is a large increase in bending stresses both normal and shear from the linear stress distribution when the matrix material is softer.

This deviation in stresses from the linear (or minimum) case is the result of the differences between the radial and circumferential Poisson's ratios. The radial Poisson's ratio being calculated is the negative of the strain in the radial direction divided by the strain in the axial direction. The circumferential Poisson's ratio being calculated is the negative of the strain in the circumferential direction divided by the strain in the axial direction. When these two ratios are equal, the bending stresses will be minimised. This situation occurs, for most matrix materials below 689.6 MPa (100,000 psi) modulus for a critical lay angle having a specific lay angle between plus and minus approximately 55° to plus and minus approximately 59.4°. For very soft matrix materials (modulus up to 34.48 MPa (5,000 psi) composites, this lay angle is approximately plus and minus 55.6°. For composites with a matrix modulus of 344.8 MPa (50,000 psi), this angle is approximately plus and minus 57.5°.

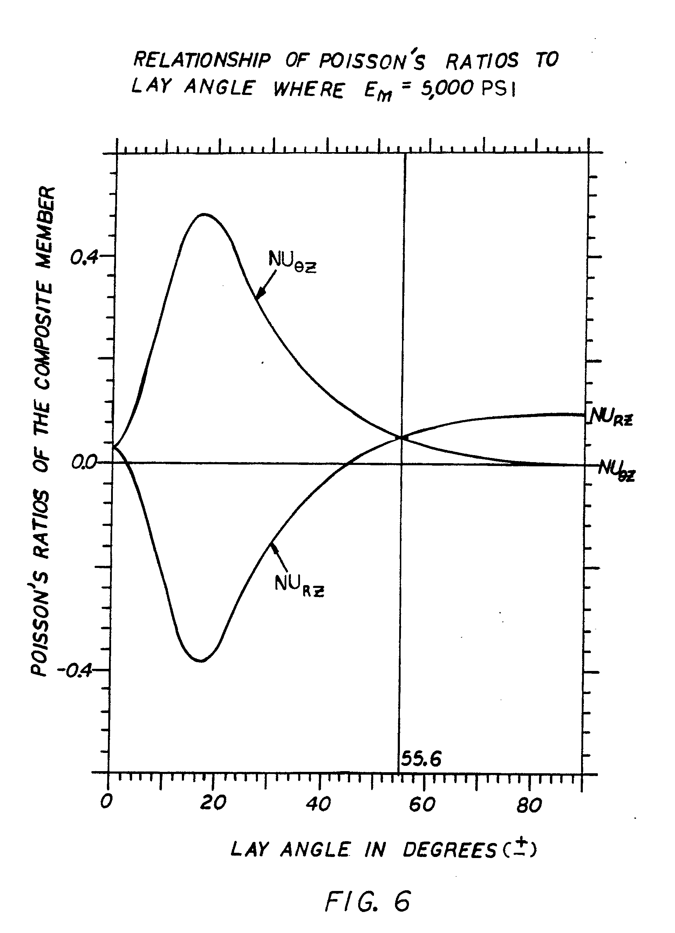

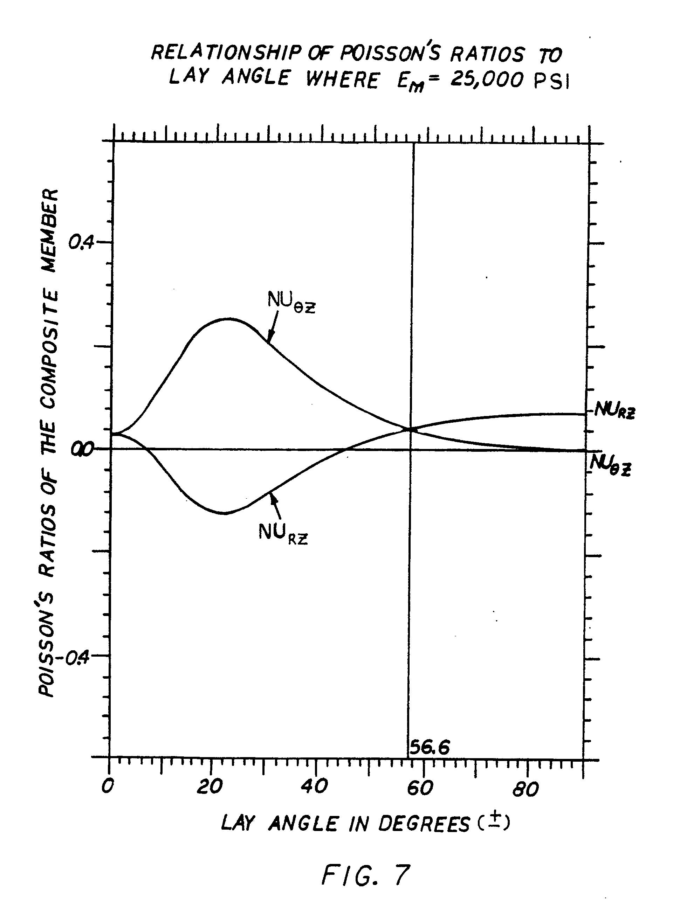

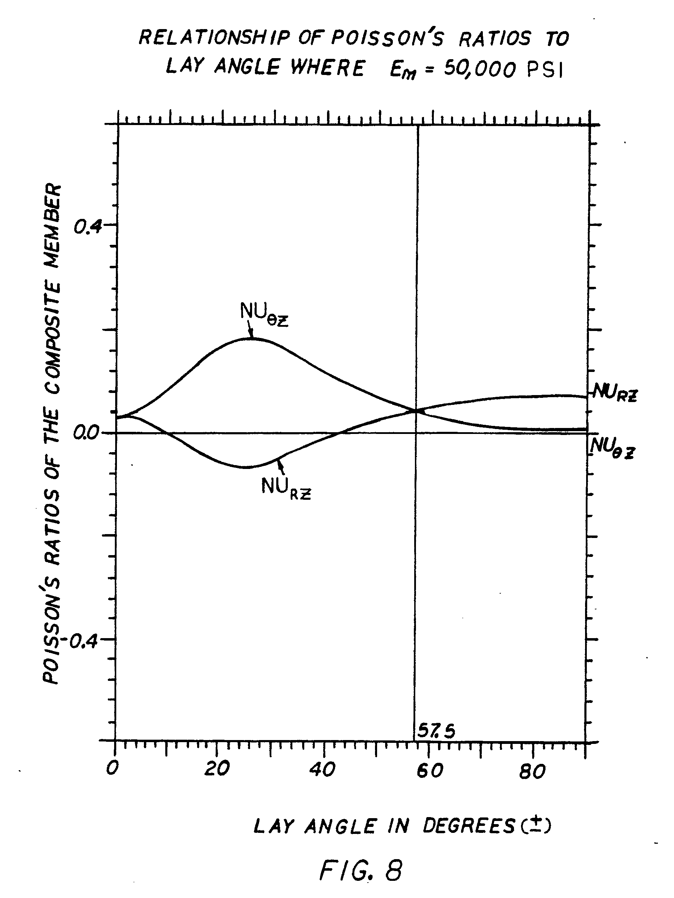

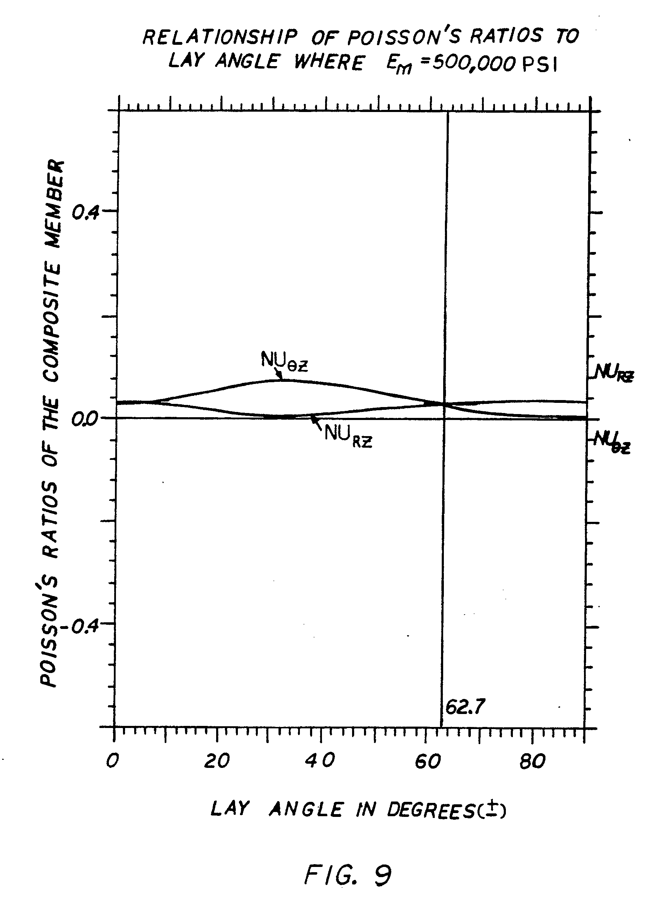

Figures 6, 7, 8 and 9 show the variation of Poisson's ratios with the winding angles and the critical or optimum angles at which the radial Poisson's ratio is equal to the circumferential Poisson's ratio.

Table 2 shows that when the composites are constructed with the critical angles as determined, bending stresses are minimised while the ratio of torsional stiffness to bending (axial) stiffness is not adversely affected. This critical angle at which the stresses are minimised depends predominantly on the properties of the matrix material. The ultimate torsional buckling load will be higher for the tubes wound at plus and minus approximately 55.5° to plus and minus approximately 57.5° than those wound at plus and minus 45°. The reason for this, is that buckling torque is proportional to the circumferential modulus $E_\theta$ of the composite tube which will be higher for lay angles of the plus and minus 55° through plus and minus 57° than that for a plus and minus 45° laminate.

To achieve a high torsional to bending (or axial) stiffness ratio, a composite made with a flexible matrix material (tensile modulus up to 689.6 MPa (100,000 psi) should be used, with stiff filamentary material embedded in the matrix and wound, with a winding or lay angle with respect to the longitudinal axis of the tube (or rod) between plus and minus approximately 55.6° through plus and minus approximately 59.5°, to minimise the stresses due to bending. Specifically, we should use angles of plus and minus approximately 55.6° for matrix materials of tensile modulus 34.48 MPa (5,000 psi) and higher angles for stiffer matrix material composites, but not exceeding lay angles of plus and minus approximately 59.5° for materials having a tensile modulus of 689.6 MPa (100,000 psi).

For epoxy matrix composites the optimum lay angle is plus and minus 62.7° to give minumum stresses without affecting the torsional/bending stiffness ratio.

The nomenclature of Poisson's ratio may be replaced by the nomenclature of strain. At the preferred angles, the two strains, the circumferential strain and the radial strain, of the tube become equal, when the tube is strained in the axial direction. Strain in the radial direction of a tube wound for example at plus and minus 45° is very small in comparison to the circumferential strain when strained in the axial direction.

The analytical process to determine the optimum lay angle for a particular matrix material and a particular filamentary material may consist of the following steps where:

E represents Young's Modulus

NU represents Poisson's ratio

G represents shear modulus

r, z and $\theta$ are the axes illustrated in Figures 3 and 4

L and $T_1$ and $T_2$ are the axes illustrated in Figure 10, where for most composites $T_1$ and $T_2$ are equivalent to each other.

1. Compute selected properties of a uniaxial composite layer which are functions of matrix and fiber properties including longitudinal Young's Modulus ($E_L$), transverse Young's Modulus ($E_T$), longitudinal Poisson's Ratio ($NU_{TL}$), transverse Poisson's Ratio ($NU_{TT}$), longitudinal shear modulus ($G_{LT}$) and transverse shear modulus ($G_{TT}$). Such methods are known to those skilled in the art. For example, the work of Z. Hashin in the September 1979 Journal of Applied Mechanics Volume 46/543-550. Hashin gives relations for various elastics constants by using minimum potential energy to determine upper bounds and minimum complementary energy to determine lower bounds. The inventor has created empirical factors which modify Hashin's expressions for $G_{LT(-)}$ and average of $E_{T(-)}$ and $E_{T(+)}$. These equations are (4) and (12). This modification extends the use of this method of calculation to the softer matrix materials of particular interest in the present invention.

Lower Bounds on Axial Constants

$$E_{L(-)} = E_f V_f + E_m V_m + \frac{4(NU_f - NU_m)^2 V_f V_m}{(V_f/K_m + V_m/K_f + 1/G_m)} \qquad (1)$$

$$NU_{TL(-)} = NU_f V_f + NU_m V_m + \frac{(NU_m - NU_f)(1/K_f - 1/K_m) V_f V_m}{(V_f/K_m + V_m/K_f + 1/G_f)} \qquad (2)$$

for $(NU_m - NU_f)/(K_f - K_m) > 0$,

or

$$NU_{TL(-)} = NU_f V_f + NU_m V_m + \frac{(NU_f - NU_m)(1/K_m - 1/K_f) V_m V_f}{(V_f/K_m + V_m/K_f + 1/G_m)} \qquad (3)$$

for $(NU_m - NU_f)/(K_f - K_m) < 0$,

and

$$G_{LT(-)} = \frac{G_m(G_m V_m + G_f(1 + V_f))}{G_m(1 + V_f) + G_f V_m}$$

$$\text{Modified } G_{LT} = G_{LT(-)} \cdot \frac{1}{(0.369183 + B \times 10^{-5} \times E_m)} \qquad (4)$$

$$\text{where } B = 5.4028 \times 10^{-4} \ (3.7266 \times 10^{-6})$$

Upper Bounds on Axial Constants

$$E_{L(+)} = E_f V_f + E_m V_m + \frac{4(NU_m - NU_f)^2 V_f V_m}{(V_f/K_m + V_m/K_f + 1/G_f)} \qquad (5)$$

$$NU_{TL(+)} = NU_f V_f + NU_m V_m + \frac{(NU_f - NU_m)(1/K_m - 1/K_f) V_m V_f}{(V_f/K_m + V_m/K_f + 1/G_m)} \qquad (6)$$

for $(NU_m - NU_f)/(K_f - K_m) > 0$,

or

$$NU_{TL(+)} = NU_f V_f + NU_m V_m + \frac{(NU_m - NU_f)(1/K_f - 1/K_m) V_f V_m}{(V_f/K_m + V_m/K_f + 1/G_f)} \qquad (7)$$

for $(NU_m - NU_f)/(K_f - K_m) < 0$,

and

$$G_{LT(+)} = \frac{G_f(G_f V_f + G_m(1 + V_m))}{(G_f(1 + V_m) + G_m V_f)} \qquad (8)$$

Transverse Constants

$$G_{TT(-)} = G_m + \cfrac{V_f}{\cfrac{1}{G_f - G_m} + \cfrac{(K_m + 2G_m)V_m}{2\,G_m\,(K_m + G_m)}} \qquad (9)$$

$$G_{TT(+)} = G_m \left(1 + \cfrac{(1 + beta_m)\,V_f}{Rho - V_f \left(1 + \cfrac{3beta_m^2 V_m^2}{(alphaV_f^3 + 1)}\right)}\right) \qquad (10)$$

$$E_{T(\pm)} = \cfrac{4K_{(\pm)}\,G_{TT(\pm)}}{K_{(\pm)} + M_{(\pm)}\,G_{TT(\pm)}} \qquad (11)$$

Modified

$$E_T = \left(\frac{E_{T(+)} + E_{T(-)}}{2}\right) \cdot \left( A \quad (E_m)^{-0.0924094}\right) \qquad (12)$$
$$\text{where } A = 2.10988\ (3.34186)$$

and

$$NU_{TT(\pm)} = \cfrac{K_{(\pm)} - M_{(\pm)}\,G_{TT(\mp)}}{K_{(\pm)} + M_{(\pm)}\,G_{TT(\mp)}} \qquad (13)$$

where

$$K_m = \cfrac{E_m}{2(1 + NU_m)\,(1 - 2NU_m)}$$

$$K_f = \cfrac{E_f}{2\,(1 + NU_f)\,(1 - 2\,NU_f)}$$

$$G_m = \cfrac{E_m}{2(1 + NU_m)}$$

$$G_f = \cfrac{E_f}{2(1 + NU_f)}$$

$$K(-) = K_m + \cfrac{V_f}{\cfrac{1}{(K_f - K_m)} + \cfrac{V_m}{(K_m + G_m)}}$$

$$K(+) = K_f + \cfrac{V_m}{\cfrac{1}{(K_m - K_f)} + \cfrac{V_f}{(K_f + G_f)}}$$

$$M_{(\pm)} = 1 + \cfrac{4\ K_{(\pm)}\ NU^2_{TL(\mp)}}{E_{L(\pm)}}$$

$$beta_m = \cfrac{K_m}{K_m + 2G_m}$$

$$beta_f = \cfrac{K_f}{K_f + 2G_f}$$

$$gamma = G_f/G_m$$

$$alpha = \cfrac{beta_m - gamma \cdot beta_f}{1 + gamma \cdot beta_f} \qquad and$$

$$Rho = \cfrac{gamma + beta_m}{gamma - 1} \cdot \qquad (14)$$

$V_f$ = Fiber Volume Fraction

Vm = Matrix Volume Fraction

m and f subscripts refer to matrix and fiber materials.

2. Compute selected properties of an angle ply laminate made of several even number of uniaxial composite layers wound alternately at plus alpha and minus alpha with respect to the axis of the shaft, in the axis system of the shaft (r, z, $\theta$). The selected properties include axial Young's Modulus $E_z$, radial Young's modulus $E_r$, circumferential Young's Modulus $E_\theta$, Poisson's Ratio $NU_{r\theta}$ (in the plane of r and $\theta$ axes), radial Poisson's Ratio $NU_{rz}$ (in the plane of r and z axes), circumferential Poisson's Ratio $NU_{\theta z}$ (in the plane of $\theta$ and z axes), shear modulus $G_{r\theta}$ (in the plane of r and $\theta$ axes), shear modulus $G_{rz}$ (in the plane of r and z axes), and shear modulus $G_{\theta z}$ (in the plane of $\theta$ and z axes). This is done by the following process:

a) Compute $[\overline{C}] = [\overline{T}]^T [C] [\overline{T}]$

where, $[\overline{C}]$ = material stiffness matrix in the r, z, $\theta$ system, rotated at plus or minus alpha angles.

[C] = material stiffness matrix in the material axes l and t system of the layer.

$[\overline{T}]$ = modified transformation matrix = $[P]^{-1} [T] [P]$,

[T] = transformation matrix, where

$$[T] = \begin{bmatrix} l_1^2 & l_2^2 & l_3^2 & 2l_1l_2 & 2l_1l_3 & 2l_2l_3 \\ m_1^2 & m_2^2 & m_3^2 & 2m_1m_2 & 2m_1m_3 & 2m_2m_3 \\ n_1^2 & n_2^2 & n_3^2 & 2n_1n_2 & 2n_1n_3 & 2n_2n_3 \\ l_1m_1 & l_2m_2 & l_3m_3 & (l_1m_2+l_2m_1) & (l_1m_3+l_3m_1) & (l_2m_3+l_3m_2) \\ l_1n_1 & l_2n_2 & l_3n_3 & (l_1n_2+l_2n_1) & (l_1n_3+l_3n_1) & (l_2n_3+l_3n_2) \\ m_1n_1 & m_2n_2 & m_3n_3 & (m_1n_2+m_2n_1) & (m_1n_3+m_3n_1) & (m_2n_3+m_3n_2) \end{bmatrix}$$

where $l_i = \cos(L, x_i)$

$m_i = \cos(T_1, x_i)$

$n_i = \cos(T_2, x_i)$

where $i = 1, 2, 3$

$l_1 = \cos(L, x_1)$

$l_2 = \cos(L, x_2)$

$l_3 = \cos(L, x_3)$

similarly $m_i$ and $n_i$ are described.

and $x_1 = r$

$x_2 = z$

$x_3 = \theta$

and

$$[P] = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1/2 & 0 & 0 \\ 0 & 0 & 0 & 0 & 1/2 & 0 \\ 0 & 0 & 0 & 0 & 0 & 1/2 \end{bmatrix}$$

(b) Compute $[\overline{C}]$ for each layer

(c) All of the stiffness matrices thus obtained are then combined to give an equivalent material stiffness matrix of the shaft material in the r, z, $\theta$ system; by using

$[C]_e = \frac{1}{t}[[A] - [B][D]^{-1}[B]]$ where,

t = thickness of the tube,

$[A] = [A_{ij}]$,

$[B] = [B_{ij}]$,

$[C] = [C_{ij}]$,

$[D] = [D_{ij}]$

$$A_{ij} = \sum_{k=1}^{N} (\bar{C}_{ij})_k t_k,$$

$$B_{ij} = \sum_{k=1}^{N} (\bar{C}_{ij})_k t_k z_k,$$

$$D_{ij} = \sum_{k=1}^{N} (\bar{C}_{ij})_k (t_k z_k^2 + t_k^3/12)$$

$z_k$ is distance from the center of the thickness of the composite member to the layer k
$t_k$ is the thickness of the layer k
k is the layer number in the laminate
$i = r, z$ or $\theta$
$j = r, z$ or $\theta$
$N$ = the total number of layers in the laminate
(d) Compute the compliance matrix, $[S]_e = [C]_e^{-1}$, where,

$$[S]_e = \begin{bmatrix} S_{rr} & S_{rz} & S_{r\theta} & 0 & 0 & 0 \\ S_{rz} & S_{zz} & S_{z\theta} & 0 & 0 & 0 \\ S_{r\theta} & S_{z\theta} & S_{\theta\theta} & 0 & 0 & 0 \\ 0 & 0 & 0 & G_{rz} & 0 & 0 \\ 0 & 0 & 0 & 0 & G_{r\theta} & 0 \\ 0 & 0 & 0 & 0 & 0 & G_{z\theta} \end{bmatrix}$$

(e) Compute the engineering constants of the material of the shaft laminate by using:

$E_r = 1/S_{rr}$, $E_z = 1/S_{zz}$, $E_\theta = 1/S_{\theta\theta}$, and

$NU_{rz} = -S_{rz}/S_{zz}$, $NU_{r\theta} = -S_{r\theta}/S_{\theta\theta}$, $NU_{\theta z} = -S_{\theta z}/S_{zz}$

3. These properties, as is evident, depend on matrix material and filament material properties, the fiber volume fraction, and the winding angle plus and minus alpha. We then compute the critical or optimum winding angle, plus and minus alpha, at which $NU_{rz}$ and $NU_{\theta z}$ are equal by iterative calculations from $^+0°$ to $^+90°$ winding angle by using proper increments in the values of $^+$ angle, i.e. $10°$ for a first iteration, $1°$ for a second iteration and $.1°$ for a final iteration.

4. The bending stresses are then calculated for a given shaft, for the critical winding angle by using the properties thus obtained. These stresses may be determined by using a finite element program, or a closed form solution in a manner familiar to those skilled in the art.

While the present invention has been disclosed in connection with the preferred embodiment thereof, it should be understood that there may be other embodiments which fall within the spirit and scope of the invention as defined by the following claims.

## Claims

1. A composite elongate member (10) for use in transmitting torque between juxtaposed elements rotatable about axes that may be misaligned, the member (10) including a series of pairs of overlapped anisotropic layers (16,18 and 20,22) bonded together circumferentially about a longitudinal axis with each layer pair comprising substantially parallel filaments (30,32) in each layer bonded together by a matrix material (12), the filaments in each layer pair being disposed at a predetermined lay angle (34,36) with respect to said longitudinal axis (24), the lay angle (34,36) of the filaments in adjacent

15

layers of each pair being substantially equal in magnitude with one another but opposite in direction with respect to said longitudinal axis (24) so that filaments (30,32) in adjacent layers of each pair cross one another, characterised in that said lay angle of at least one of said pairs of layers is in a range of between about 55 degrees to about 62.7 degrees and is preselected within said range with respect to the stiffness of the matrix material (12) so that the strain in the member (10) in the circumferential direction is substantially equal to the strain in the member (10) in the radial direction when the member (10) is subjected to strain in the axial direction, whereby the bending stress in the composite member is at a minimum while the ratio of torsional stiffness to bending stiffness of the member (10) is not adversely affected.

2. A composite member (10) according to Claim 1, wherein the magnitude of said lay angle (34,36) within said range is directly related to the magnitude of the Young's modulus of the matrix material (12) with the lay angle magnitude being toward the upper end of said range at matrix material Young's moduli approaching 3448 MPa (500,000 psi) and being toward the lower end of said range at matrix material Young's moduli approaching 34.48 MPa (5,000 psi).

3. A composite member according to Claim 2, wherein said matrix material Young's modulus is in a range of about 689.6 MPa (100,000 psi) to about 3448 MPa (500,000 psi) and said lay angle is in a range of about 60 degrees to about 62.7 degrees.

4. A composite member according to Claim 3, wherein said matrix material (12) is an epoxy.

5. A composite member according to Claim 2, wherein said matrix material Young's modulus is in a range of about 34.48 MPa (5,000 psi) to about 689.6 MPa (100,000 psi) and said lay angle is in a range of about 55 degrees to about 60 degrees.

6. A composite member according to Claim 5, wherein said matrix material (12) is a polyurethane.

7. A composite member according to any one of the preceding Claims, wherein said filaments (30,32) are of high modulus materials selected from the group consisting of: carbon, boron, glass, graphite, polyamide and steel.

8. A composite member according to any one of the preceding Claims, wherein the Poisson's ratio of the member (10) in the radial direction is equal to the Poisson's ratio of the member (10) in the circumferential direction.

**Revendications**

1. Elément allongé composite (10) destiné à être utilisé dans la transmission d'un couple entre des éléments juxtaposés tournant autour d'axes qui peuvent être hors d'alignement, l'élément (10) comprenant une série de paires de couches anisotropes se chevauchant (16, 18 et 20, 22), liées ensemble dans le sens circonférentiel autour d'un axe longitudinal, chaque paire de couches comprenant des filaments sensiblement parallèles (30, 32) dans chaque couche, liés ensemble par une matière formant matrice (12), les filaments étant, dans chaque paire de couches, disposés selon un angle de pose prédéterminé (34, 36) par rapport audit axe longitudinal (24), les angles de pose (34, 36) des filaments de couches adjacentes de chaque paire ayant des valeurs sensiblement égales mais étant de sens opposé par rapport audit axe longitudinal (24), de sorte que des filaments (30, 32) de couches adjacentes de chaque paire se croisent entre eux, caractérisé par le fait que ledit angle de pose d'au moins l'une desdites paires de couches se situe dans une plage d'environ 55 degrés à environ 62,7 degrés et est présélectionné à l'intérieur de ladite plage en fonction de la rigidité de la matière formant matrice (12), pour que la contrainte dans l'élément (10) dans la direction circonférentielle soit sensiblement égale à la contrainte dans l'élément (10) dans la direction radiale lorsque l'élément (10) est soumis à une contrainte dans la direction axiale, ce par quoi l'effort de flexion dans l'élément composite se situe à un minimum, alors que le rapport de la rigidité en torsion à la rigidité en flexion de l'élément (10) n'est pas affecté de façon défavorable.

2. Elément composite (10) selon la revendication 1, dans lequel la valeur dudit angle de pose (30, 36) à l'intérieur de, ladite plage est directement rattachée à la valeur du module d'Young de la matière formant matrice (12), la valeur de l'angle, de pose se situant vers la borne supérieure de ladite plage pour des modules d'Young de la matière formant matrice proches de 3448 MPa (500 000 livres par pouce carré) et se situant vers la borne inférieure de ladite plage pour des modules d'Young de la matière formant matrice proches de 34,48 MPa (5 000 livres par pouce carré).

3. Elément composite selon la revendication 2, dans lequel ledit module d'Young de la matière formant matrice se situe dans une plage d'environ 689,6 MPa (100 000 livres par pouce carré) à environ 3 448 MPa (500 000 livres par pouce carré) et ledit angle de pose se situe dans une plage d'environ 60 degrés à environ 62,7 degrés.

4. Elément composite selon la revendication 3, dans lequel ladite matière formant matrice (12) est un époxy.

5. Elément composite selon la revendication 2, dans lequel ledit module d'Young de la matière formant matrice se situe dans une plage d'environ 34,48, MPa (5 000 livres par pouce carré) à environ, 689,6 MPa (100 000 livres par pouce carré) et ledit angle de pose se situe dans une plage d'environ 55 degrés à environ 60 degrés.

6. Elément composite selon la revendication 5, dans, lequel ladite matière formant matrice (12) est un polyuréthanne.

7. Elément composite selon l'une des revendications précédentes, dans lequel lesdits filaments (30, 32) sont faits de matières à module élevé, choisies dans le groupe constitué par : le carbone, le bore, le verre, le graphite, le polyamide et l'acier.

8. Elément composite selon l'une des revendications précédentes, dans lequel le coefficient de Poisson de l'élément (10) dans la direction radiale est égal an coefficient de Poisson de l'élément (10) dans la direction circonférentielle.

## Ansprüche

1. Langgestrecktes Verbundglied (10) zur Drehmomentübertragung zwischen nebeneinander gestellten Elementen, die um versetzt angeordnete Achsen drehbar sind, wobei das Verbundglied (10) eine Reihe überlappter anisotroper Schichtpaare (16, 18 und 20, 22) aufweist, die am Umfang um eine Längsachse aneinander gebunden sind und jeweils weitgehend parallele Fasern (30, 32) besitzen, die in jeder Schicht mittels eines Verbundmaterials (12) gebunden sind, wobei die Fasern in jedem Schichtpaar in einem vorbestimmten Lagewinkel (34, 36) zur Längsachse (24) angeordnet sind und der Lagewinkel (34, 36) der Fasern in benachbarten Schichten eines jeden Schichtpaars im wesentlichen gleich groß, aber in bezug zur Längsachse (24) entgegengesetzt gerichtet ist derart, daß sich die Fasern (30, 32) in benachbarten Schichtlagen kreuzen,
dadurch gekennzeichnet, daß der Lagewinkel wenigstens eines der Schichtpaare im Bereich von etwa 55° bis 62,7° liegt und in diesem Bereich in bezug auf die Steifigkeit des Verbundmaterials (12) vorgewählt ist derart, daß im Verbundglied (10) die Spannung in Umfangsrichtung im wesentlichen der Spannung im Verbundglied (10) in Radialrichtung entspricht, wenn das Verbundglied (10) in Axialrichtung Spannungen ausgesetzt ist, wobei die Biegespannung im Verbundglied minimal ist, während das Verhältnis aus Torsionssteifigkeit zu Biegesteifigkeit des Verbundglieds (10) nicht ungünstig beeinflußt ist.

2. Verbundglied nach Anspruch 1, dadurch gekennzeichnet, daß die Größe des Lagewinkels (34, 36) in dem Bereich im direkten Verhältnis zum Elastizitätsmodul des Verbundmaterials (12) derart steht, daß sich die Lagewinkelgröße bei einem Verbundmaterialelastizitätsmodul von angenähert 3448 MPa (500.000 psi) am oberen Ende des Bereichs befindet und sich bei einem Verbundmaterialelastizitätsmodul von angenähert 34,48 MPa (5.000 psi) am unteren Bereichsende befindet.

3. Verbundglied nach Anspruch 2, dadurch gekennzeichnet, daß der Verbundmaterialelastizitätsmodul in einem Bereich von etwa 689,6 MPa (100.000 psi) bis etwa 3448 MPa (500.000 psi) liegt und daß sich der Lagewinkel in einem Bereich von etwa 60° bis etwa 62,7° befindet.

4. Verbundglied nach Anspruch 3, dadurch gekennzeichnet, daß das Verbundmaterial (12) ein Epoxy ist.

5. Verbundglied nach Anspruch 2, dadurch gekennzeichnet, daß sich der Verbundmaterialelastizitätsmodul in einem Bereich von etwa 34,48 MPa (500.000 psi) bis etwa 689,6 MPa (100.000 psi) befindet und daß der Lagewinkel in einem Bereich von etwa 55° bis etwa 60° liegt.

6. Verbundglied nach Anspruch 5, dadurch gekennzeichnet, daß das Verbundmaterial (12) ein Polyurethan ist.

7. Verbundglied nach einem der Ansprüche 1 - 6, dadurch gekennzeichnet, daß die Fasern (30, 32) aus Materialien hohen Elastizitätsmoduls aus der Gruppe Kohlenstoff, Bor, Glas, Graphit, Polyamid und Stahl gewählt sind.

8. Verbundglied nach einem der Ansprüche 1 - 7, dadurch gekennzeichnet, daß die Poissonsche Zahl des Verbundglieds (10) in radialer Richtung der Poissonschen Zahl des Verbundglieds (10) in Umfangsrichtung entspricht.

FIG. 1

FIG. 2

FIG. 10

FIG. 4

FIG. 3

FIG. 5A

FIG. 5B

FIG. 5C

FIG. 5D

RELATIONSHIP OF POISSON'S RATIOS TO LAY ANGLE WHERE $E_M$ = 5,000 PSI

FIG. 6

RELATIONSHIP OF POISSON'S RATIOS TO LAY ANGLE WHERE $E_M$ = 25,000 PSI

FIG. 7

RELATIONSHIP OF POISSON'S RATIOS TO
LAY ANGLE WHERE   $E_m$ = 50,000 PSI

LAY ANGLE IN DEGREES (±)

FIG. 8

RELATIONSHIP OF POISSON'S RATIOS TO
LAY ANGLE WHERE $E_m$ =500,000 PSI

FIG. 9